# EUROPÄISCHE PATENTSCHRIFT

(11) **EP 1 979 134 B1**
(45) Veröffentlichungstag und Bekanntmachung des Hinweises auf die Patenterteilung: **07.07.2010**
(21) Anmeldenummer: 06807826.0
(22) Anmeldetag: 22.11.2006
(51) Int. Cl.: B25F 5/00, F16D 3/12, B24B 23/02

(54) **GETRIEBE, INSBESONDERE FÜR ELEKTROHANDWERKZEUGMASCHINEN**
GEARING, IN PARTICULAR FOR PORTABLE ELECTRIC POWER TOOLS
ENGRENAGE, NOTAMMENT POUR APPAREILS ÉLECTROPORTATIFS

(30) Priorität: 16.01.2006 DE 102006001985
(43) Veröffentlichungstag der Anmeldung: 15.10.2008
(73) Patentinhaber: Robert Bosch GmbH, 70442 Stuttgart (DE)
(72) Erfinder: WIKER, Juergen, 310052 Hangzhou / Bing Jiang District (CN)
(86) Internationale Anmeldenummer: PCT/EP2006/068751
(87) Internationale Veröffentlichungsnummer: WO 2007/087909

(56) Entgegenhaltungen:
- EP-A- 1 122 390
- WO-A-2004/056535
- DE-A1- 4 120 617
- DE-A1- 10 059 186
- GB-A- 2 327 254
- US-A1- 2002 130 007

## Beschreibung

### Stand der Technik

Die Erfindung betrifft ein Getriebe, insbesondere für Elektrohandwerkzeugmaschinen, bevorzugt für Winkelschleifmaschinen.

Bei Winkelschleifmaschinen ist in der Regel eine manuell zu betätigende Arretiereinrichtung (Spindel-Lock) am Getriebegehäuse vorgesehen. Durch Drücken und Halten eines Knopfes wird sichergestellt, dass sich die Spindel bei der Montage oder Demontage der Schleifscheibe nicht mitdreht. Dies wird dadurch erreicht, dass beim Betätigen der Arretiereinrichtung ein Bolzen in eine Vertiefung des Abtriebs-Zahnrades eingreift und dieses so gegen ein Verdrehen sichert. Da das Abtriebs-Zahnrad fest mit der Spindel verbunden ist, ist somit auch die Spindel gegen ein Verdrehen gesichert. Manuelle Arretiervorrichtungen für Elektrohandwerkzeugmaschinen sind beispielsweise aus der US 4,448,098 sowie US 3,802,518 bekannt.

Ferner sind bei Bohrmaschinen, Bohrschraubern und Bohrhämmern automatische Arretiervorrichtungen bekannt. Die bekannten Arretiervorrichtungen sperren die Spindel selbsttätig bei einer Drehmomentübertragung von der Spindel zum Antrieb. Bei einer Drehmomentübertragung vom Antrieb auf die Spindel wird die Spindel selbsttätig freigegeben. Derartige Elektrohandwerkzeugmaschinen mit automatischen Arretiereinrichtungen sind in der DE 100 03 773 A1 sowie der US 5,016,501 beschrieben.

Aus der DE 102 59 519 A1 ist es bekannt, Schwingungen im Antriebsstrang von Elektrohandwerkzeugmaschinen durch federelastische Dämpfungselemente abzudämpfen, die zwischen dem Abtriebs-Zahnrad und der Spindel angeordnet sind.

Die DE 41 20 617 A1 offenbart ein Getriebe, welches einen antriebsseitigen Kupplungsabschnitt und einen abtriebsseitigen Kupplungsabschnitt umfasst, wobei zur Drehmomentübertragung eine Klaue am abtriebsseitigen Kupplungsabschnitt in eine zugeordnete Ausnehmung am antriebsseitigen Kupplungsabschnitt eingreift. Zwischen den Kupplungsabschnitten befinden sich Klemmelemente, die mit Aufnahmen für elastische Federelemente versehen sind. Im zusammengebauten Zustand befinden sich die elastischen Federelemente zwischen den Klemmelementen und den Klauen des abtriebsseitigen Kupplungsabschnitts.

Die Klemmelemente bewirken eine Sperrung der Drehmomentübertragung, falls abtriebsseitig ein größeres Drehmoment als auf der Antriebsseite wirkt. Die Sperrung ist jedoch auf eine Drehrichtung begrenzt, wohingegen bei entgegengesetzt gerichteter Drehmomentbeaufschlagung keine Sperrung erfolgt. Bei der Sperrung beaufschlagen innen liegende Spreizflanken der Klemmelemente die Außenflächen des abtriebsseitigen Kupplungsabschnittes.

### Aufgabe und Vorteile der Erfindung

Der Erfindung liegt die Aufgabe zugrunde, ein Getriebe mit einer automatischen Arretiereinrichtung vorzuschlagen, bei dem Schwingungen im Antriebsstrang reduziert werden und das einen geringen Bauraumbedarf aufweist.

Diese Aufgabe wird mit den Merkmalen des Anspruchs 1 gelöst. Vorteilhafte Ausgestaltungen der Erfindung sind in den Unteransprüchen angegeben. Der Erfindung liegt der Gedanke zugrunde, eine Arretiereinrichtung (Spindel-Lock) und eine Getriebedämpfung zusammen in einem Getriebe, insbesondere für Winkelschleifmaschinen, zu integrieren. Zur Reduzierung des axialen Bauraumbedarfs ist erfindungsgemäß vorgesehen, dass die Getriebedämpfung integraler Bestandteil der Arretiereinrichtung ist. Anders ausgedrückt, bilden die Arretiereinrichtung und die Getriebedämpfung eine gemeinsame Baugruppe. Die Schwingungen im Antriebsstrang werden erfindungsgemäß von mindestens einem federelastischen Dämpfungselement aufgenommen, das in Umfangsrichtung zwischen einem Mitnahmeelement des Abtriebs-Zahnrads und einem drehfest mit der Spindel gekoppelten Gegenelement der Arretiereinrichtung angeordnet ist. Das Mitnahmeelement ist relativ zu dem Gegenelement in Umfangsrichtung über einen begrenzten Umfangswinkel verstellbar. Wird das Abtriebs-Zahnrad von dem vom Antrieb angetriebenen Antriebszahnrad mit einem Drehmoment beaufschlagt, so wird das Dämpfungselement von dem Mitnahmeelement gegen das Gegenelement in Umfangsrichtung gedrückt, wodurch sich das Dämpfungselement elastisch verformt und somit Schwingungen im Antriebsstrang dämpft. Die vorhandenen Schwingungen sind u.a. auf fertigungsbedingte Toleranzen zurückzuführen. Durch das Vorsehen des mindestens einen Dämpfungselements werden Vibrationen herabgesetzt, Betriebsgeräusche minimiert und die beim Anlaufen des Antriebs sowie die im Betrieb auftretenden Lastspitzen an der Verzahnung reduziert. Als Dämpfungsmaterial kann beispielsweise gummiartiges Material verwendet werden. Es ist auch denkbar, in kleine Kissen abgefüllte, insbesondere viskose, Flüssigkeiten zu verwenden.

Entscheidend zur Realisierung der Erfindung ist es, dass das federelastische Dämpfungselement an dem Gegenelement angreift, welches drehfest mit einem Bauteil der Arretierungseinrichtung oder einstückig mit diesem verbunden ist. Bevorzugt ist das Gegenelement an einer Klemmscheibe der Arretiereinrichtung angeordnet. Zwischen der Klemmscheibe und der die Arretiereinrichtung umschließenden Umfangswand können Sperrkörper, insbesondere Wälzkörper, geklemmt werden. Dadurch dass die Klemmscheibe drehfest mit der Spindel gekoppelt ist, ist auch die Spindel zur Befestigung von Werkzeugen, insbesondere von Trennscheiben, gegen ein Verdrehen gesichert.

Um den Bauraum in axialer Richtung möglichst gering zu halten, ist in Weiterbildung der Erfindung vorgesehen, dass entweder das Mitnahmeelement oder das Gegenelement als axialer Fortsatz ausgebildet ist, der axial in eine Tasche eingreift. Die Tasche bildet in entsprechender Weise das Gegenelement bzw. das Mitnahmeelement. Zur Drehmomentübertragung stützt sich der axial in die Tasche hinein ragende Fortsatz an einer radialen Wand der Tasche ab. Gemäß einer bevorzugten Ausführungsform ist das Gegenelement als Tasche und das Mitnehmerelement als Fortsatz ausgebildet. Die Tasche ist dabei in die dem Abtriebs-Zahnrad zugewandte Seite der Klemmscheibe eingebracht. Der drehfest mit dem Abtriebs-Zahnrad gekoppelte Fortsatz ist über einen durch den Abstand der radialen Wände der Tasche begrenzten Umfangswinkel in Umfangsrichtung innerhalb der Tasche verschwenkbar. Der Abstand der radialen Wände in Umfangsrichtung definiert somit den Umfangswinkel, in dem das Abtriebs-Zahnrad relativ zu der Spindel verdrehbar ist. Bei Getrieben, die in beide Umfangsrichtungen angetrieben werden können, ist es von Vorteil, wenn zu beiden Seiten des Fortsatzes innerhalb der Tasche jeweils mindestens ein Dämpfungselement angeordnet ist. Das Dämpfungsmaterial kann auf verschiedene Arten positioniert werden. Es ist denkbar, dass das Dämpfungselement lose in dem Zwischenraum zwischen Fortsatz und Taschenwand eingelegt ist. Ebenso ist es möglich, die Dämpfungselemente durch geeignete Maßnahmen, beispielsweise durch Aufvulkanisieren, mit dem Mitnahmeelement und/oder dem Gegenelement fest zu verbinden.

Anstelle der Kombination aus Tasche und Fortsatz als Gegenelement und Mitnahmeelement ist es denkbar, zwei zur gegenseitigen Anlage bringbare Fortsätze vorzusehen.

Es hat sich als vorteilhaft erwiesen, das Mitnahmeelement nicht unmittelbar an dem Abtriebs-Zahnrad zu befestigen oder einstückig mit diesem auszubilden, sondern an einer drehfest mit dem Antriebs-Zahnrad gekoppelten Mitnehmerscheibe anzuordnen bzw. einstückig mit dieser auszubilden. Es ist jedoch auch die unmittelbare Anordnung des Mitnahmeelements an dem Abtriebs-Zahnrad realisierbar.

Eine besonders vorteilhafte Möglichkeit der Ausbildung der Arretiereinrichtung besteht darin, dass die Klemmscheibe an ihrem Außenumfang mindestens eine erste, vorzugsweise drei im Umfangsrichtung beabstandet zueinander angeordnete erste Ausnehmungen aufweist. Diese ersten Ausnehmungen erstrecken sich über einen Umfangsabschnitt und verbreitern sich radial in eine erste Umfangsrichtung (Drehrichtung). In den Ausnehmungen sind Sperrkörper, vorzugsweise Wälzkörper, angeordnet. Der Durchmesser der Sperrkörper ist derart bemessen, dass die Sperrkörper im schmaleren Bereich der Ausnehmung zwischen der Innenwand der Ausnehmung und der die Arretiereinrichtung umgebenden Umfangswand verklemmbar sind. Die Umfangswand wird bevorzugt von dem Getriebegehäuse gebildet. Andererseits sind die Sperrkörper im breiteren Bereich der Ausnehmung derart aufgenommen, dass sich die Klemmscheibe innerhalb der Umfangswand drehen kann. Wird die Klemmscheibe in Richtung sich verbreiternder Ausnehmung gedreht, so wandern die Sperrkörper aufgrund ihrer Masseträgheit in den schmaleren Bereich und verhindern damit ein Weiterdrehen der Klemmscheibe und damit der mit der Klemmscheibe drehfest gekoppelten Spindel.

Soll die Spindel zusätzlich auch in die entgegengesetzte Umfangsrichtung blockierbar sein, beispielsweise zum Lösen des Werkzeugs, so ist erfindungsgemäß mindestens eine zweite, vorzugsweise drei zweite Ausnehmungen mit Sperrkörpern vorgesehen, wobei sich die zweiten Ausnehmungen in die entgegengesetzte Umfangsrichtung in radialer Richtung verbreitern, wie die ersten Ausnehmungen.

Damit die Spindel entsperrt wird, wenn dies über das Abtriebs-Zahnrad von dem, insbesondere elektromotorischen, Antrieb angetrieben wird, ist in Weiterbildung der Erfindung mindestens ein sich in radialer Richtung erstreckender Finger vorgesehen, mit dem die Sperrkörper bei einem Verdrehen des Abtriebs-Zahnrads in Richtung breiterem Bereich der Ausnehmungen von dem schmaleren Bereich in deren breiteren Bereich überführbar sind und dort gehalten werden, so dass verhindert wird, dass die Sperrkörper wieder in den schmaleren Ausnehmungsbereich wandern und somit ein Weiterdrehen der Spindel verhindern. Handelt es sich um ein in beide Umfangsrichtungen antreibbares Getriebe, so muss der Finger, je nach Drehrichtung, die Sperrkörper in den ersten Ausnehmungen oder die Sperrkörper in den zweiten Ausnehmungen in Drehrichtung verschieben. Es ist denkbar, jedem Sperrkörper einen eigenen Finger zuzuordnen, der den jeweiligen Sperrkörper radial hintergreift.

Mit Vorteil ist sowohl der Fortsatz als auch der Finger an der Mitnehmerscheibe angeordnet. Der Umfangswinkel, über den der Finger verstellbar ist, wird von dem Abstand der radialen Wände der Tasche begrenzt, in die der Fortsatz axial hineingreift. Damit der Finger den zugehörigen Sperrkörper in Umfangsrichtung verschieben kann, ist es von Vorteil, wenn der Sperrkörper axial aus seiner Ausnehmung in Richtung des Fingers heraus ragt, so dass der Sperrkörper bei einer Drehung des Fingers von dem Finger erfasst werden kann. Es ist auch möglich, den Finger abgekröpft auszubilden, so dass dieser in die Tasche eingreift.

### Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine Explosionsdarstellung des erfindungsgemäßen Ge- triebes,
- Fig. 2: das in ein Getriebegehäuse montierte Getriebe im Querschnitt, Blickrichtung vom Ritzel Richtung Spin- del, das im Uhrzeigersinn von einem Antrieb angetrie- ben ist, jedoch ohne Getriebedämpfung,
- Fig. 3: das Getriebe im Querschnitt beim Anziehen der Spann- mutter auf der Spindel bei abgeschaltetem Antrieb, jedoch ohne Getriebedämpfung,
- Fig. 4: das Getriebe im Querschnitt beim Lösen der Spannmut- ter von der Spindel bei abgeschaltetem Antrieb, je- doch ohne Getriebedämpfung und
- Fig. 5: das Getriebe im Querschnitt mit in die Arretierein- richtung integrierter Getriebedämpfung.

### Ausführungsbeispiel

In den Figuren sind gleiche Bauteile und Bauteile mit gleicher Funktion mit den gleichen Bezugszeichen gekennzeichnet.

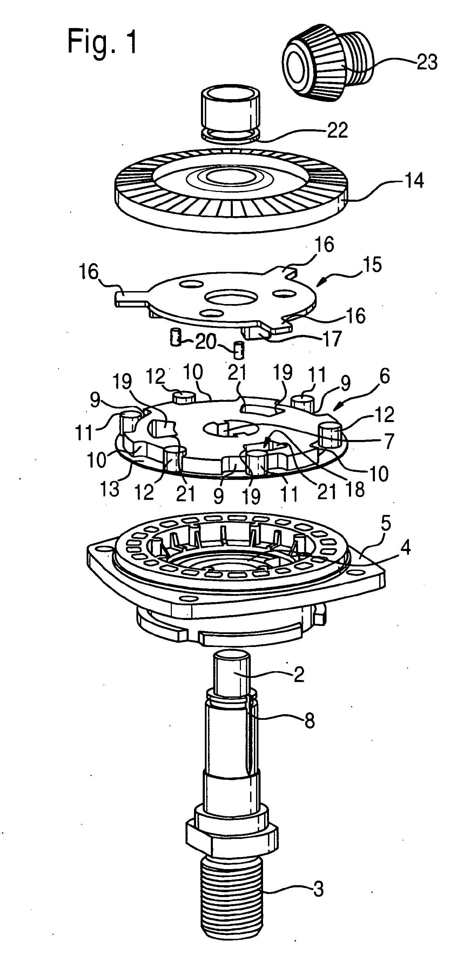

In den Figuren ist ein Getriebe 1 für eine Winkelschleifmaschine dargestellt. In Fig. 1 sind die Bauteile des Getriebes 1 in einer Explosionsdarstellung gezeigt. Das Getriebe 1 umfasst eine Spindel 2 mit einem an ihrem freien Ende angeordneten Gewinde 3 zum Spannen einer nicht dargestellten Schleifscheibe mit einer nicht dargestellten Spannmutter.

Ferner umfasst das Getriebe auch ein Kugellager 4 mit einem äußeren Lagerflansch 5. Im montierten Zustand ist die Spindel 2 durch Pressung mit dem Kugellager 4 verbunden. Das Getriebe 1 umfasst weiterhin eine Klemmscheibe 6, die im montierten Zustand ebenfalls durch Pressung mit der Spindel 2 drehfest gekoppelt ist. Zusätzlich ist die Klemmscheibe 6 über zwei radial nach innen vorstehende und sich in axialer Richtung erstreckende Keile 7 in zwei sich ebenfalls in axialer Richtung erstreckenden Nuten 8 am Außenumfang der Spindel 2 gehalten. Die Klemmscheibe 6 ist somit form- und kraftschlüssig mit der Spindel 2 verbunden.

Am Außenumfang weist die Klemmscheibe 6 drei erste Ausnehmungen 9 und drei dazu jeweils versetzt angeordnete zweite Ausnehmungen 10 auf. Die ersten Ausnehmungen 9 verbreitern sich radial im Uhrzeigersinn. Die zweiten Ausnehmungen 10 verschmälern sich in radialer Richtung im Uhrzeigersinn. In den Ausnehmungen 9, 10 der Klemmscheibe 6 befinden sich erste Sperrkörper 11 bzw. zweite Sperrkörper 12. Die Sperrkörper 11, 12 liegen auf dem Böden 13 der Klemmscheibe 6 auf und sind in radialer sowie in tangentialer Richtung frei beweglich. Auf der dem Boden 13 gegenüber liegenden Seite werden die Sperrkörper 11, 12 durch ein als Tellerrad ausgebildetes Abtriebs-Zahnrad 14 begrenzt. Noch vorteilhafter ist es, wenn die Sperrkörper nicht auf einem drehfest mit der Klemmscheibe 6 verbundenen Boden 13 angeordnet sind, sondern stattdessen auf einer Scheibe, die drehfest mit dem Lagerflansch 5 verbunden ist. Hierdurch wird das Verstellverhalten der Sperrkörper 11, 12 verbessert.

Zwischen Abtriebs-Zahnrad 14 und Klemmscheibe 6 ist eine Mitnehmerscheibe 15 angeordnet, die durch geeignete Maßnahmen, wie Verschrauben oder Verschweißen, mit der Unterseite des Abtriebs-Zahnrads 14 drehfest verbunden ist. In radialer Richtung erstrecken sich von der Mitnehmerscheibe 15 drei Finger 16, die die ersten Sperrkörper 11 radial hintergreifen. In axialer Richtung erstrecken sich in Richtung Klemmscheibe 6 drei als Fortsätze ausgebildete Mitnahmeelemente 17. Diese greifen im montierten Zustand in zugehörige Taschen 18 in der Oberseite der Mitnehmerscheibe 15 ein. Über die Mitnahmeelemente 17 wird das auf das Abtriebs-Zahnrad 14 aufgebrachte Drehmoment auf die als Taschen 18 ausgebildeten Gegenelemente der Klemmscheibe 6 übertragen. Das Drehmoment wird von den Mitnehmern 17 auf die radialen Wände 19 der Taschen 18 übertragen. Zwischen den radialen Wänden 19 und den Mitnehmern 17 sind im montieren Zustand Dämpfungselemente 20 angeordnet, mit denen Schwingungen im Antriebsstrang gedämpft werden können. Bei der Drehmomentübertragung verformen sich die Dämpfungselement elastisch und werden zwischen den Wänden 19 und den Mitnehmern 17 eingeklemmt. Soll das gezeigte Getriebe 1 beispielsweise in einer Bohrmaschine mit zwei Drehrichtungen eingesetzt werden, so ist es von Vorteil, wenn auch Dämpfungselemente zwischen den den Wänden 19 gegenüberliegenden Wänden 21 der Taschen 18 und den Mitnehmern 17 Dämpfungselemente angeordnet sind.

Das Abtriebs-Zahnrad 14 ist frei drehbar auf der Spindel 2 gelagert. In axialer Richtung nach oben wird das Abtriebs-Zahnrad 14 durch einen Sicherungsring 22 in seiner Position gehalten. Nach unten liegt das Abtriebs-Zahnrad 14 auf der Klemmscheibe 6 auf.

Über ein mit dem Abtriebs-Zahnrad 14 kämmendes, als Ritzel 23 ausgebildetes Antriebszahnrad, das über eine Welle von einem elektromotorischen Antrieb angetrieben wird, wird wiederum das Abtriebs-Zahnrad 14 angetrieben.

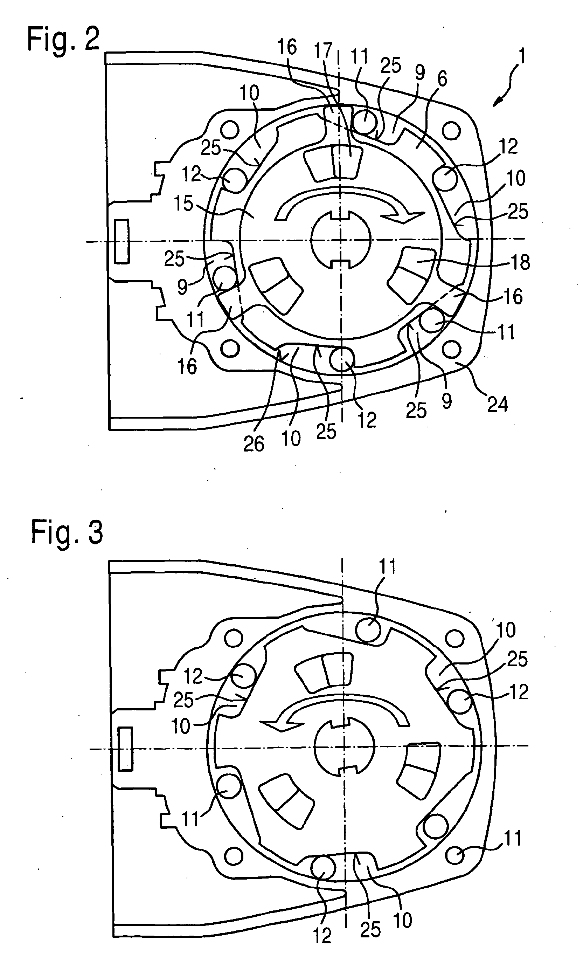

Die Funktion der Arretiereinrichtung, bestehend aus Mitnehmerscheibe 15 mit Mitnahmeelementen 17 sowie Klemmscheibe 6 mit Taschen 18, Ausnehmungen 9, 10 sowie Sperrkörpern 11, 12 wird im Folgenden anhand der Fig. 2 bis 4 näher erläutert. Aus Übersichtlichkeitsgründen wurde in diesen Figuren 2 bis 4 auf eine Darstellung der Dämpfungselemente 20 verzichtet. Diese sind in Umfangsrichtung zwischen den Mitnehmern 17 und den im Uhrzeigersinn vorderen Wänden 19 der Taschen 18 angeordnet.

Fig. 2 zeigt eine fertig in ein Getriebegehäuse 24 montierte Arretiereinrichtung im Querschnitt, Blickrichtung vom Antriebs-Zahnrad 23 Richtung Kugellager 4. Die Fig. 2 zeigt den Betriebszustand, d.h. das Abtriebszahnrad 14 und die drehfest mit diesem verbundene Mitnehmerscheibe 15 werden in der durch den Pfeil angedeuteten Drehrichtung angetrieben. Dabei greifen die Mitnahmeelemente 17 in die Taschen 18 der Klemmscheibe 6. Das Drehmoment wird von dem Abtriebs-Zahnrad 14 über die Mitnehmerscheibe 15 mit Mitnahmelementen 17 auf die Klemmscheibe 6 und damit auf die Spindel 2 übertragen. Gleichzeitig bringen die Finger 16 die drei ersten Sperrkörper 11, der insgesamt sechs Sperrkörper 11, 12 aus ihrer Sperrposition im Bereich des radial schmalen Umfangsabschnitts der Ausnehmungen 9 im Uhrzeigersinn heraus. Dies ist notwendig, weil sich die ersten Sperrkörper 11 ansonsten zwischen der Innenwand 25 der ersten Ausnehmungen 9 und der von dem Getriebegehäuse 24 gebildeten drehfesten Umfangswand 26 verklemmen würden (Spindel-Lockfunktion bzw. Arretierfunktion).

Die drei zweiten Sperrkörper 12 werden aufgrund ihrer Massenträgheit gegen die im Uhrzeigersinn hintere radiale Wand der zugehörigen zweiten Ausnehmungen 10 gedrückt. Dieser Effekt wird noch verbessert, wenn die Sperrkörper 11,12 nicht auf einem drehfest mit der Klemmscheibe 6 verbundenen Boden 13 angeordnet sind, sondern stattdessen auf einer Scheibe, die drehfest mit dem Lagerflansch 5 verbunden ist. Die Innenwände 25 dieser zweiten Ausnehmungen 10 sind andersherum abgeschrägt als die Innenwände der ersten Ausnehmungen 9, so dass die zweiten Sperrkörper 12 auf die breitere Seite der Ausnehmungen wandern, wo sie sich nicht verklemmen können.

In Fig. 3 wurde auf die Darstellung der Mitnehmerscheibe 15 verzichtet. Fig. 3 zeigt den Zustand während des Anziehens der nicht dargestellten Spannmutter im Gegenuhrzeigersinn (siehe Pfeilrichtung). Der Antrieb ist hierbei ausgeschaltet. Wird ein Anzugsmoment auf die nicht dargestellte Spannmutter aufgebracht, dreht sich die Spindel 2 und damit auch die Klemmscheibe 6 ein kleines Stück im Gegenuhrzeigersinn mit, bis die drei zweiten Sperrkörper 12 in ihren zweiten Ausnehmungen 10 entlang der Innenwände 25 in den schmaleren Bereich der zweiten Ausnehmungen 10 wandern und sich zwischen der Umfangswand 26 und der Innenwand 25 der Klemmscheibe 6 verklemmen. Somit wird ein Weiterdrehen der Spindel 2 verhindert und das Anzugsmoment zum Spannen der Spannmutter kann aufgebracht werden.

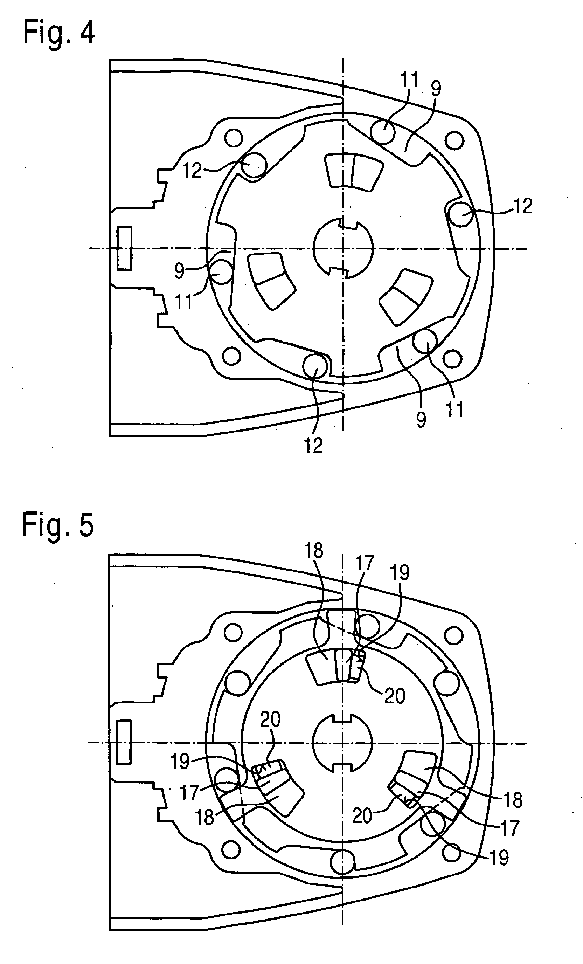

In Fig. 4 ist ebenfalls die Mitnehmerscheibe 15 nicht dargestellt. Hier ist der Zustand beim Lösen der Spannmutter dargestellt. Beim Lösevorgang wandern die drei ersten Sperrkörper 11 entlang der Innenwand 25 der ersten Ausnehmungen 9 in den schmäleren Bereich der Ausnehmungen 9 und verklemmen sich zwischen der Umfangswand 26 und den Innenwänden 25 der ersten Ausnehmungen 9. Damit kann das Moment zum Lösen der Spannmutter aufgebracht werden ohne dass sich die Spindel 2 mitdreht.

In Fig. 5 ist der Zustand gemäß Fig. 2, jedoch mit zwischen Mitnehmern 17 und den radial verlaufenden Wänden 19 der Taschen 18 angeordneten Dämpfungselementen 20 aus gummiartigem Material dargestellt. Bei der dargestellten Konfiguration werden Schwingungen bei einem Antrieb im Uhrzeigersinn gedämpft. Es ist denkbar zusätzlich auf der den Dämpfungselementen 20 gegenüberliegenden Seiten der Mitnahmeelemente 17 zusätzliche Dämpfungselemente anzuordnen. Aufgrund der Integration der Dämpfungselemente 20 in die in die Klemmscheibe eingebrachten Taschen 18 der ist die axiale Bauhöhe des Getriebes 1 minimal. Die Taschen 18 könnten bei einer Anordnung der Mitnahmeelemente 17 an der Klemmscheibe 6 ebenso gut in der Mitnehmerscheibe 15 oder in dem Abtriebs-Zahnrad 14 angeordnet werden.

## Patentansprüche

1. Getriebe, insbesondere für Elektrohandwerkzeugmaschinen, mit einem von einem Antrieb angetriebenen Antriebs-Zahnrad (23) und einem mit diesem kämmenden, eine Spindel (2) antreibenden Abtriebs-Zahnrad (14), und mit einer Arretiereinrichtung, über die die Spindel (2) zum Lösen und Befestigen von Werkzeugen gegenüber einer die Arretiereinrichtung umschließenden Umfangswand (26) drehfest koppelbar ist und die bei einer Drehmomentübertragung vom Antrieb auf die Spindel (2) selbsttätig öffnet und bei einer Drehmomentübertragung von der Spindel (2) zum Antrieb selbsttätig sperrt, wobei das Abtriebs-Zahnrad (14) relativ zu der Spindel (2) über einen begrenzten Umfangswinkel verdrehbar und ein Mitnahmeelement (17) drehfest mit dem Abtriebs-Zahnrad (14) gekoppelt ist zur Drehmomentübertragung auf ein drehfest mit der Spindel (2) gekoppeltes Gegenelement (18) der Arretiereinrichtung, die Arretiereinrichtung mindestens ein federelastisches Dämpfungselement (20) umfasst, das in Umfangsrichtung zwischen dem Mitnahmeelement (17) und dem Gegenelement (18) angeordnet ist, wobei das Gegenelement (18) an einer Klemmscheibe (6) der Arretiereinrichtung angeordnet ist,
**dadurch gekennzeichnet,**
**dass** die Klemmscheibe (6) an ihrem Außenumfang mindestens eine sich in eine erste Umfangsrichtung radial verbreiternde erste Ausnehmung (9) aufweist, und dass in der ersten Ausnehmung (9) ein radial sowie in beide Umfangsrichtungen beweglicher erster Sperrkörper (11) angeordnet ist, und dass der erste Sperrkörper (11) die Spindel (2) bei einer Drehmomentübertragung von der Spindel (2) zum Antrieb in die erste Umfangsrichtung durch Verklemmen zwischen einer Innenwand (25) der ersten Ausnehmung (9) und der Umfangswand (26) blockiert, dass mindestens ein drehfest mit dem Abtriebs-Zahnrad (14) gekoppelter Finger (16) vorgesehen ist, der bei angetriebenem Abtriebs-Zahnrad (14) den ersten Sperrkörper (11) in Umfangsrichtung aus seiner Sperrposition heraus in seine Freigabeposition verschiebt und dort hält, und dass der erste Sperrkörper (11) axial aus seiner Ausnehmung (9) in Richtung Finger (16) herausragt.

2. Getriebe nach Anspruch 1,
**dadurch gekennzeichnet,**
**dass** das Mitnahmeelement (17) als axialer Fortsatz und dass das Gegenelement (18) als Tasche ausgebildet ist, oder umgekehrt, und dass der Fortsatz (17) axial in die Tasche (18) eingreift und sich zur Drehmomentübertragung an einer sich radial erstreckenden Taschenwand (19, 21) abstützt.

3. Getriebe nach Anspruch 1 oder 2,
**dadurch gekennzeichnet,**
**dass** zu beiden, in entgegengesetzte Umfangsrichtungen gerichteten Seiten des Mitnahmeelements (17) jeweils ein Dämpfungselement (20) angeordnet ist.

4. Getriebe nach einem der vorhergehenden Ansprüche,
**dadurch gekennzeichnet,**
**dass** das Mitnahmeelement (17) an einer drehfest mit dem Abtriebs-Zahnrad (14) gekoppelten Mitnehmerscheibe (15) angeordnet ist.

5. Getriebe nach einem der vorhergehenden Ansprüche,
**dadurch gekennzeichnet,**
**dass** die Klemmscheibe (6) an ihrem Außenumfang mindestens eine zweite, sich in eine der ersten Umfangsrichtung entgegengesetzte zweite Umfangsrichtung radial verbreiternde zweite Ausnehmung (10) aufweist, und dass in der zweiten Ausnehmung (10) ein radial sowie in beide Umfangsrichtungen beweglicher zweiter Sperrkörper (12) angeordnet ist, und dass der zweite Sperrkörper (12) die Spindel (2) bei einer Drehmomentübertragung von der Spindel (2) zum Antrieb in die zweite Umfangsrichtung durch Verklemmen zwischen einer Innenwand (25) der zweiten Ausnehmung (10) und der Umfangswand blockiert.

6. Getriebe nach einem der Ansprüche 5,
**dadurch gekennzeichnet,**
**dass** der drehfest mit dem Abtriebs-Zahnrad (14) gekoppelte Finger (16) bei angetriebenem Abtriebs-Zahnrad (14) den zweiten Sperrkörper (12) in Umfangsrichtung aus seiner Sperrposition heraus in seine Freigabeposition verschiebt und dort hält.

7. Getriebe nach Anspruch 6,
**dadurch gekennzeichnet,**
**dass** der Fortsatz (17) und der Finger (16) an der Mitnehmerscheibe (15) angeordnet sind, und dass das Bewegungsspiel des Fortsatzes (17) in der Tasche (18) in beide Umfangsrichtungen so bemessen ist, dass der erste oder der zweite Sperrkörper (11, 12) in die erste oder zweite Umfangsrichtung aus seiner Sperrposition mittels des Fingers (16) heraus verschiebbar ist.

8. Getriebe nach einem der Ansprüche 5 bis 7,
**dadurch gekennzeichnet,**
**dass** der zweite Sperrkörper (12) axial aus seiner Ausnehmung (10) in Richtung Finger (16) herausragt.

## Claims

1. Gearing, in particular for portable electric power tools, comprising a drive gear (23) driven by a drive and an output gear (14) which meshes with said drive gear (23) and drives a spindle (2), and comprising a locking device via which the spindle (2), for releasing and fastening tools, can be coupled in a rotationally fixed manner relative to a circumferential wall (26) enclosing the locking device and which automatically opens when torque is transmitted from the drive to the spindle (2) and automatically blocks when torque is transmitted from the spindle (2) to the drive, wherein the output gear (14) is rotatable relative to the spindle (2) over a limited circumferential angle, and a driving element (17) is coupled to the output gear (14) in a rotationally fixed manner for transmitting torque to a counter-element (18) of the locking device, said counter-element (18) being coupled to the spindle (2) in a rotationally fixed manner, and the locking device comprises at least one elastic damping element (20) which is arranged in the circumferential direction between the driving element (17) and the counter-element (18), wherein the counter-element (18) is arranged on a clamping disc (6) of the locking device, **characterized in that** the clamping disc (6) has on its outer circumference at least one first recess (9) widening radially in a first circumferential direction, and **in that** a first blocking body (11) movable radially and in both circumferential directions is arranged in the first recess (9), and **in that** the first blocking body (11), when torque is transmitted from the spindle (2) to the drive, blocks the spindle (2) in the first circumferential direction by becoming jammed between an inner wall (25) of the first recess (9) and the circumferential wall (26), **in that** at least one finger (16) coupled to the output gear (14) in a rotationally fixed manner is provided, which finger (16), when output gear (14) is driven, displaces the first blocking body (11) in the circumferential direction out of its blocking position into its release position and holds it there, and **in that** the first blocking body (11) projects axially from its recess (9) in the direction of finger (16).

2. Gearing according to Claim 1, **characterized in that** the driving element (17) is designed as an axial extension and **in that** the counter-element (18) is designed as a pocket, or vice versa, and **in that** the extension (17) engages axially in the pocket (18) and is supported on a radially extending pocket wall (19, 21) for the torque transmission.

3. Gearing according to Claim 1 or 2, **characterized in that** a damping element (20) is arranged on either side of the driving element (17), the two sides being directed in opposite circumferential directions.

4. Gearing according to one of the preceding claims, **characterized in that** the driving element (17) is arranged on a driver disc (15) coupled to the output gear (14) in a rotationally fixed manner.

5. Gearing according to one of the preceding claims, **characterized in that** the clamping disc (6) has on its outer circumference at least one second recess (10) widening radially in a second circumferential direction opposed to the first circumferential direction, and **in that** a second blocking body (12) movable radially and in both circumferential directions is arranged in the second recess (10), and **in that** the second blocking body (12), when torque is transmitted from the spindle (2) to the drive, blocks the spindle (2) in the second circumferential direction by becoming jammed between an inner wall (25) of the second recess (10) and the circumferential wall.

6. Gearing according to Claim 5, **characterized in that** the finger (16) coupled to the output gear (14) in a rotationally fixed manner, when output gear (14) is driven, displaces the second blocking body (12) in the circumferential direction out of its blocking position into its release position and holds it there.

7. Gearing according to Claim 6, **characterized in that** the extension (17) and the finger (16) are arranged on the driver disc (15), and **in that** the amount of play which the extension (17) has in the pocket (18) in both circumferential directions is dimensioned in such a way that the first or the second blocking body (11, 12) can be displaced in the first or the second circumferential direction out of its blocking position by means of the finger (16).

8. Gearing according to one of Claims 5 to 7, **characterized in that** the second blocking body (12) projects axially from its recess (10) in the direction of finger (16).

## Revendications

1. Engrenage, notamment pour appareils électriques portables, comprenant une roue dentée d'entraînement (23) entraînée par un entraînement une roue dentée de sortie (14) s'engrenant avec celle-ci et entraînant une broche (2), et un dispositif de blocage, par le biais duquel la broche (2) peut être accouplée de manière solidaire en rotation pour desserrer et fixer des outils par rapport à une paroi périphérique (26) entourant le dispositif de blocage, et qui dans le cas d'un transfert de couple de l'entraînement à la broche (2), ouvre automatiquement et dans le cas d'un transfert de couple de la broche (2) à l'entraînement, bloque automatiquement, la roue dentée de sortie (14) pouvant tourner par rapport à la broche (2) sur un angle périphérique limité et un élément d'entraînement (17) étant accouplé de manière solidaire en rotation à la roue dentée de sortie (14) pour le transfert de couple à un élément conjugué (18) du dispositif de blocage accouplé de manière solidaire en rotation à la broche (2), le dispositif de blocage comprenant au moins un élément d'amortissement (20) élastique à ressort, qui est disposé dans la direction périphérique entre l'élément d'entraînement (17) et l'élément conjugué (18), l'élément conjugué (18) étant disposé sur un disque de serrage (6) du dispositif de blocage,
**caractérisé en ce que**
le disque de serrage (6) présente sur sa périphérie extérieure au moins un premier évidement (9) s'élargissant radialement dans une première direction périphérique, et **en ce que** dans le premier évidement (9) est disposé un premier corps de blocage (11) déplaçable radialement ainsi que dans deux directions périphériques, et **en ce que** le premier corps de blocage (11) bloque la broche (2) dans le cas d'un transfert de couple de la broche (2) à l'entraînement dans la première direction périphérique par serrage entre une paroi interne (25) du premier évidement (9) et la paroi périphérique (26), **en ce qu'**au moins un doigt (16) accouplé de manière solidaire en rotation à la roue dentée de sortie (14) est prévu, lequel déplace le premier corps de blocage (11) dans la direction périphérique de sa position de blocage dans sa position de libération et l'y maintient, lorsque la roue dentée de sortie (14) est entraînée, et **en ce que** le premier corps de blocage (11) fait saillie axialement hors de son évidement (9) dans la direction du doigt (16).

2. Engrenage selon la revendication 1,
**caractérisé en ce que**
l'élément d'entraînement (17) est réalisé sous forme de saillie axiale et **en ce que** l'élément conjugué (18) est réalisé sous forme de poche, ou inversement, et **en ce que** la saillie (17) vient en prise axialement dans la poche (18) et s'appuie en vue du transfert de couple sur une paroi de la poche s'étendant radialement (19, 21).

3. Engrenage selon la revendication 1 ou 2,
**caractérisé en ce que**
des deux côtés orientés dans des directions périphériques opposées de l'élément d'entraînement (17), est disposé à chaque fois un élément d'amortissement (20).

4. Engrenage selon l'une quelconque des revendications précédentes,
**caractérisé en ce que**
l'élément d'entraînement (17) est disposé sur un disque d'entraînement (15) accouplé de manière solidaire en rotation à la roue dentée de sortie (14).

5. Engrenage selon l'une quelconque des revendications précédentes,
**caractérisé en ce que**
le disque de serrage (6) présente sur sa périphérie extérieure au moins un deuxième évidement (10) s'élargissant radialement dans une deuxième direction périphérique opposée à la première direction périphérique, et **en ce que** dans le deuxième évidement (10) est disposé un deuxième corps de blocage (12) déplaçable radialement et dans les deux directions périphériques, et **en ce que** le deuxième corps de blocage (12) bloque la broche (2) dans le cas d'un transfert de couple de la broche (2) à l'entraînement dans la deuxième direction périphérique par serrage entre une paroi interne (25) du deuxième évidement (10) et la paroi périphérique.

6. Engrenage selon la revendication 5,
**caractérisé en ce que**
le doigt (16) accouplé de manière solidaire en rotation à la roue dentée de sortie (14) déplace le deuxième corps de blocage (12) dans la direction périphérique de sa position de blocage dans sa position de libération et l'y maintient, lorsque la roue dentée de sortie (14) est entraînée.

7. Engrenage selon la revendication 6,
**caractérisé en ce que**
la saillie (17) et le doigt (16) sont disposés sur le disque d'entraînement (15), et **en ce que** le jeu de la saillie (17) dans la poche (18) dans les deux directions périphériques est dimensionné de telle sorte que le premier ou le deuxième corps de blocage (11, 12) puisse être déplacé dans la première ou la deuxième direction périphérique hors de sa position de blocage au moyen du doigt (16).

8. Engrenage selon l'une quelconque des revendications 5 à 7,
**caractérisé en ce que**
le deuxième corps de blocage (12) fait saillie axialement hors de son évidement (10) dans la direction du doigt (16).
